# EUROPEAN PATENT APPLICATION

(11) **EP 1 801 373 A1**
(43) Date of publication of application: **27.06.2007**
(21) Application number: 05270095.2
(22) Date of filing: 20.12.2005
(51) Int. Cl.: F01N 3/022, B01D 46/24, B29C 47/20

(54) **Particle Filter**

(71) Applicant: Delphi Technologies, Inc., Troy, MI 48007 (US)
(72) Inventor: Donjon, Patrick, L4940, Bascharage (LU)
(74) Representative: Jones, Keith William

(57) **Abstract**

A diesel particle filter (200) comprises a central region (202) and a peripheral region (204), the central region (202) having a lower porosity than the peripheral region (204). The differing porosities of the materials constituting the central region (202) and the peripheral region (204) allows for preferential flow of exhaust gases through the peripheral region (204). A method of producing a diesel particle filter (200) is also disclosed.

## Description

This invention relates to a particle filter. More particularly, but not exclusively it relates to a particle filter for an exhaust of a diesel engine.

Current diesel particle filters (DPFs) comprise a lattice like structure with pores of specified cross-sectional size, typically from 20 to 9 µm at their broadest point. Typically the DPF is fabricated from a silicate material such as cordierite.

As soot from the diesel engine accumulates within the pores the DPF becomes clogged and the efficiency of the engine decreases. The DPF is regenerated by burning off the soot particles at an elevated temperature in to convert the soot to carbon dioxide.

However, the central portion of the DPF receives more air and heat at the start of the regeneration cycle. This leads to the preferential regeneration of this central portion, and the heating and regeneration of the peripheral portion of the DPF is slowed.

The preferential regeneration of the central portion results in an increased flow of exhaust gases through the central portion leading to an increase in the temperature at the central portion. The resultant lateral temperature gradient causes cracking of the DPF due to thermal stresses within the DPF. In extreme cases the cracking can lead to the failure of the DPF requiring the replacement of the DPF.

Additionally, the increased temperature at the central portion of the DPF can cause the lattice structure to melt in this region.

Attempts have been made to overcome these problems by, for instance, fabricating small segments of a DPF and bonding them together. The pore size within each segment is uniform, however the segments are bonded together such that the pore size of the central portion is smaller than that of the peripheral portion, see for example JP 1145377. The lateral gradation of pore size increases the flow of exhaust gases through the peripheral regions and thereby reduces the thermal gradients across the DPF. Such an arrangement is complex and costly to produce, requiring the production of a number of shaped segments and their bonding together.

According to the present invention there is provided a method of producing a diesel particle filter comprising co-extruding a porous central region of the filter and a porous peripheral region of the filter, wherein the central region has a lower porosity than the peripheral region.

Such a co-extrusion process simplifies the manufacture of a DPF having a laterally varying pore size profile.

The central region may comprise a different material to the peripheral region. Alternatively, the central region may comprise a mixture of a material comprising the peripheral region and at least one other material. The central region may comprise a mixture of silicon carbide and a magnesium aluminium silicate, for example cordierite. The central region and the peripheral region may both comprise silicon carbide.

The method may comprise co-extruding the central region and the peripheral region using coaxial screw drives. The method may comprise mounting a peripheral annular screw drive about a central linear screw drive.

The method may comprise urging the co-extruded central region and peripheral region through an inwardly tapering frusto-conical constriction.

The use of concentrically mounted screw drives allows near continuous production of a rod of material to form a DPF. Also, screw drives drive the rod of material through the constriction, which serves to compact the central and peripheral regions to form a single rod of material.

According to a second aspect of the present invention there is provided a diesel particle filter comprising a central region and a peripheral region, the central region having a lower porosity than the peripheral region characterised in that the peripheral region comprises a first material, or mixture of materials, and the central region comprises a second material, or mixture of materials.

The first material, or mixture of materials may comprise silicon carbide. The second material, or mixture of materials may comprise a different material, or mixture of materials to the first material, or mixture of materials. The second material, or mixture of materials may comprise a mixture of a material comprising the first material, or mixture of materials, and at least one other material. The second material, or mixture of materials may comprise a mixture of silicon carbide and a magnesium aluminium silicate. The first material, or mixture of materials and the second material, or mixture of materials may both comprise silicon carbide.

The central region and the peripheral region may be co-extruded.

According to a third aspect of the present invention there is provided a diesel particle filter produced in accordance with the method of the first aspect of the present invention.

The invention will now be described, by way of example only, with reference to the accompanying drawings, in which:
Figure 1 is a schematic sectional diagram of a co-extruder used in the production of a DPF in accordance with at least an aspect of the present invention;
Figure 2 is a schematic cross-section of an embodiment of a DPF according at least an aspect of the present invention, produced in accordance with another aspect of the present invention.

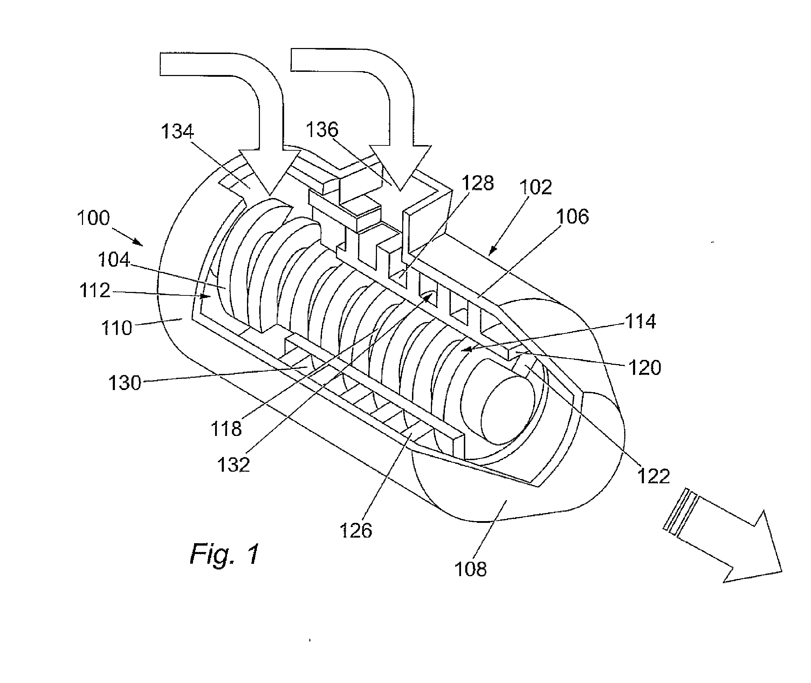

Referring now to Figure 1, a co-extruder 100 comprises a body 102 and an auger 104.

The body 102 comprises a cylindrical housing 106 that terminates at one end in an open ended, inwardly tapering frustoconical section 108 that defines an extrusion orifice. The auger 104 locates coaxially within the housing 106.

An annular internal wall 110 separates the housing 106 into an auger feed chamber 112 and an extrusion chamber 114. The auger feed chamber 112 is at an opposite end of the housing 106 to the frustoconical section 108.

A cylindrical sleeve 116 locates rotatably within the extrusion chamber 114 and terminates proximate the start of the frustoconical section 108. A thread 118 of the auger 104 terminates adjacent an inner surface 120 of the sleeve 116. An end face 122 of the thread 118 abuts a drive projection (not shown) on the inner surface 120.

A helical wall 126 projects outwardly from an outer surface 128 of the sleeve 116. The wall 126 terminates adjacent an inner surface 130 of the housing 106 and defines a channel 132 there between.

An opening 134 in the housing 106 allows the feeding of low porosity material, for example a mixture of silicon carbide SiC and cordierite pastes or a low porosity SiC paste, into a thread 118 of the auger 104 at the feed chamber 112. A typical mean pore size of a low porosity material is approximately 9µm.

Similarly, a chute 136 opens into the extrusion chamber 114 and allows the feeding of high porosity material, for example high porosity silicon carbide into the channel 132. A typical mean pore size of a high porosity material is approximately 20µm.

The auger 104 is rotated by a motor (not shown) causing the passage of the low porosity material along the auger 104 towards the frustoconical section 108. The abutment of the end face 122 and the drive projection 124 causes the sleeve 118 to rotate in sympathy with the auger 104. This rotation of the sleeve 118 causes the high porosity material to pass along the channel 132 towards the frustoconical section 108.

The central low porosity material and the peripheral high porosity material exit the auger 104 and the channel 132 respectively, into the frustonconical section 108. The taper of the frustoconical section 108 compacts the two materials together to produce a particle filter rod with a low porosity at the centre and a high porosity at the periphery.

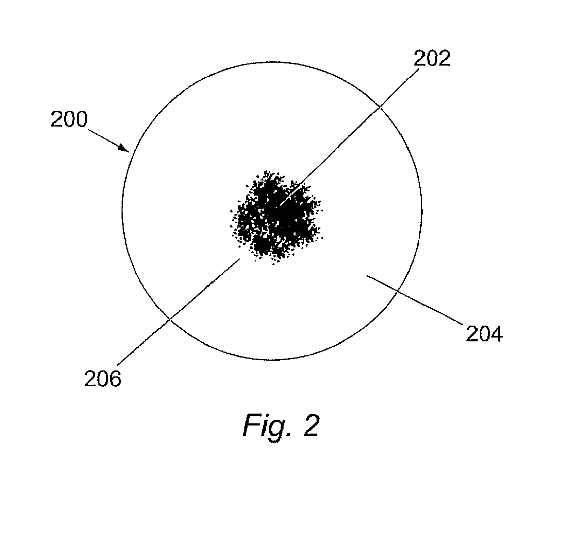

Figure 2 shows a disc shaped diesel particle filter 200 produced by taking a section of the rod produced using the co-extruder 100 described hereinbefore. The filter 200 comprises a central region 202 having a low porosity and a peripheral region 204 having a high porosity.

The nature of the compacting process results in there being an indistinct interfacial region 206 between the central and peripheral regions 202,204. The interfacial region 206 comprises a mixture of high and low porosity materials. This results in a gradual outward radial variation in porosity from low to high porosity. Such a gradual change can act to prevent abrupt changes in temperature at the boundary between the central and peripheral regions 202,204 and provide a more even radial thermal gradient across the filter 200.

It will be appreciated that although shown with reference to circular filters it is envisages that the invention may encompass other shapes of filter. For example, a truncated pyramidal end section of the extruder instead of the frustoconical section can be use produce a square filter. Other configurations of filter that are envisaged are rectangular, cylindrical, tear drop shape dependent upon the shape of the extrusion orifice.

It will be further appreciated that although shown with reference to the use of only two regions of different porosity the invention may encompass the production of a filter with any number of regions of differing porosities. For example, there may be a number of concentrically mounted screw threaded sleeves to produce a number of annular regions each having a different porosity. Such an arrangement will produce a more uniform thermal gradient across a filter and thereby reduce the damaging effects of thermal discontinuities within the filter.

## Claims

1. A method of producing a diesel particle filter (200) comprising co-extruding a porous central region (202) of the filter (200) and a porous peripheral region (204) of the filter (200), **characterised in that** the central region (202) has a lower porosity than the peripheral region (204).

2. The method of claim 1 wherein the peripheral region (204) comprises silicon carbide.

3. The method of either claim 1 or claim 2 wherein the central region (204) comprises a different material to the peripheral region (202).

4. The method of either claim 1 or claim 2 wherein the central region (202) comprises a mixture of a material comprising the peripheral region (204)and at least one other material.

5. The method of any preceding claim wherein the central region (202) comprises a mixture of silicon carbide and a magnesium aluminium silicate

6. The method of either claim 1 or claim 2 wherein central region (202) and the peripheral region (204) both comprise silicon carbide.

7. The method of any preceding claim comprising co-extruding the central region and the peripheral (204) region using coaxial screw drives (104,118).

8. The method of claim 7 comprising mounting a peripheral annular screw drive (118) about a central linear screw drive (104).

9. The method of any preceding claim comprising urging the co-extruded central region (202) and peripheral region (204) through an inwardly tapering constriction (108).

10. A diesel particle filter (200) comprising a central region (202) and a peripheral region (204), the central region (202) having a lower porosity than the peripheral region (204) **characterised in that** the peripheral region (204) comprises a first material, or mixture of materials, and the central region (202) comprises a second material, or mixture of materials.

11. A filter according to claim 10 wherein the first material, or mixture of materials comprises silicon carbide.

12. A filter according to either claim 10 or claim 11 wherein the second material, or mixture of materials comprises a different material, or mixture of materials to the first material, or mixture of materials.

13. A filter according to either claim 10 or claim 11 wherein the second material, or mixture of materials comprises a mixture of a material comprising the first material, or mixture of materials, and at least one other material.

14. A filter according to any one of claims 10 to 13 wherein the second material, or mixture of materials comprises a mixture of silicon carbide and a magnesium aluminium silicate

15. A filter according to either of claims 10 or 11 wherein the first material, or mixture of materials and the second material, or mixture of materials both comprise silicon carbide.

16. A filter according to any one of claims 10 to 15 wherein the central region (202) and the peripheral region (204) are co-extruded.

17. A filter according to any one of claims 10 to 16 wherein the central region (202) comprises a material with a mean pore size of approximately 9µm.

18. A filter according to any one of claims 10 to 17 wherein the peripheral region (204) comprises a material with a mean pore size of approximately 20µm.

19. A filter produced in accordance with the method of any one of claims 1 to 9.
